# EUROPÄISCHE PATENTSCHRIFT

(11) **EP 2 640 547 B1**
(45) Veröffentlichungstag und Bekanntmachung des Hinweises auf die Patenterteilung: **22.10.2014**
(21) Anmeldenummer: 11785408.3
(22) Anmeldetag: 18.11.2011
(51) Int. Cl.: B23K 26/06, B41J 2/47, B41J 2/44, G06K 1/12, G06K 15/12, H04N 1/40, H01S 3/102

(54) **LASERVORRICHTUNG UND VERFAHREN ZUR BEARBEITUNG VON GEGENSTÄNDEN MIT EINEM IN DER PULSENERGIE STEUERBAREN LASER**
LASER APPARATUS AND METHOD FOR PROCESSING OBJECTS WITH A LASER WHICH IS CONTROLLABLE IN TERMS OF THE PULSE ENERGY
DISPOSITIF À LASER ET PROCÉDÉ POUR USINER DES OBJETS AU MOYEN D'UN LASER À ÉNERGIE D'IMPULSION COMMANDABLE

(30) Priorität: 18.11.2010 DE 102010044128
(43) Veröffentlichungstag der Anmeldung: 25.09.2013
(73) Patentinhaber: Bundesdruckerei GmbH, 10969 Berlin (DE)
(72) Erfinder: MYSLIWITZ, Daniel, 80995 München (DE)
(74) Vertreter: Patentanwälte Bressel und Partner mbB
(86) Internationale Anmeldenummer: PCT/EP2011/070422
(87) Internationale Veröffentlichungsnummer: WO 2012/066110

(56) Entgegenhaltungen:
- WO-A2-2009/007721
- DE-A1-102008 025 776
- DE-A1-102008 028 705
- DE-T5-112005 003 088
- US-A- 3 996 457
- US-A- 5 226 051
- US-A- 5 986 688
- US-A1- 2002 033 873

## Beschreibung

Die Erfindung betrifft eine Bearbeitungsvorrichtung zur Bearbeitung eines Gegenstands, insbesondere zur Lasermarkierung eines auf Kunststoffbasis hergestellten Dokuments, sowie ein entsprechendes Verfahren, die einen hinsichtlich einer Pulsenergie und eines zeitlichen Abrufs von Laserpulsen steuerbaren Pulslaser verwenden, sowie eine Filtereinrichtung zum Filtern der für die Laseransteuerung verwendeten Signale.

Aus dem Stand der Technik ist es bekannt, Gegenstände, beispielsweise auf Kunststoffbasis hergestellte Dokumente, insbesondere Wert- und Sicherheitsdokumente, mit einem Laser zu markieren. Auf Kunststoffbasis hergestellte Dokumente werden häufig aus einzelnen Folien, die aus demselben oder unterschiedlichen Kunststoffen bestehen, zu einem Dokumentkörper zusammengefügt. Hierbei werden einige oder alle der Folien so ausgestaltet, dass diese für den menschlichen Betrachter nicht wahrnehmbare oder zumindest nicht ins Auge tretende Pigmente umfassen, die eine Absorption von Laserstrahlung begünstigen. Die bei der Absorption der Laserstrahlung absorbierte Energie wird genutzt, um das Kunststoffmaterial der entsprechend präparierten Folie, d.h. der aus dieser Folie gebildeten Schicht, in dem Dokument zu verändern. Insbesondere werden chemische Verbindungen der Polymere aufgebrochen, aus denen das Kunststoffmaterial gebildet ist, und eine Carbonisierung herbeigeführt. Dieses führt zu einer Schwärzung des beispielsweise ursprünglich transparenten Kunststoffmaterials. Alternativ ist es möglich, andere farbliche Änderungen oder strukturelle Änderungen durch die Lasereinstrahlung zu bewirken.

Bei einer Lasermarkierung von beispielsweise kunststoffbasierten Dokumenten ist es über eine Steuerung einer Pulsenergie der einzelnen Laserpulse möglich, einen Schwärzungsgrad des Kunststoffes zu kontrollieren. Hierüber können beispielsweise Graustufen bei der Lasermarkierung erzeugt werden. Vorteilhafterweise wird jeder Bildpunkt durch eine Wechselwirkung eines einzigen Laserpulses mit dem Material des Dokuments erzeugt. Über eine Strahlführungseinrichtung wird somit der von dem Laser erzeugte Laserstrahl über das Dokument bewegt, so dass durch die einzelnen Pulse in dem Laserstrahl jeweils einzelne Bildpunkte auf dem Dokument bzw. im Innern des Dokuments markiert werden.

Abhängig von der speziell gewünschten Bearbeitung, welche durch eine Bearbeitungsinformation vorgegeben ist, ist es daher erforderlich, die Pulsenergie aufeinanderfolgender Pulse zu variieren. Insbesondere beim Einbringen und/oder Erzeugen von Schriftzeichen, die mit einem einheitlichen Schwärzungsgrad erzeugt werden sollen, ist ein Wechsel zwischen einer vorgegebenen Pulsenergie, insbesondere einer maximalen Pulsenergie, und einer sehr geringen oder gar keiner Pulsenergie an benachbarten Markierungsorten notwendig. Das Erzeugen von neuen Schriftzeichen und Symbolen auf und/oder in einem Gegenstand, insbesondere einem auf Kunststoffbasis hergestellten Gegenstand, wird hier auch als Markieren bezeichnet. Mit Markieren ist jedoch nicht ein Kennzeichnen vorhandener Entitäten, beispielsweise Schriftzeichen, Symbolen oder Ähnlichen, gemeint. Markieren ist somit als Synonym für die Begriffe Einbringen, Aufbringen und/oder Erzeugen im Zusammenhang mit dem Speichern von Informationen mittels optisch wahrnehmbarer Veränderungen in dem Gegenstand zu verstehen.

Es sind Laserbearbeitungsvorrichtungen bekannt, bei denen der zur Markierung verwendete Pulslaser einen Energiesteuereingang zum Empfangen eines analogen Signals aufweist, dessen Spannung die Laserpulsenergie steuert. Zusätzlich weist ein solcher Pulslaser einen Abrufeingang zum Empfangen eines Signals auf, mittels dessen zeitlich ein Abrufen der Laserpulse steuerbar ist. Zum Abrufen der Laserpulse wird in der Regel ein Taktsignal benutzt. Angepasst an dieses Taktsignal, d. h. zeitlich korreliert mit dem Taktsignal, wird eine Strahlführungseinrichtung gesteuert, so dass der durch den Laser ausgegebene Strahl mit jedem durch das Taktsignal vorgegebenen Takt an eine neue Bearbeitungsposition auf dem Gegenstand geführt wird. Somit werden, sofern das Taktsignal zeitlich äquidistante Takte beispielsweise über äquidistante Rechteckpulse vorgibt, in zeitlich äquidistanter Abfolge Laserpulse von dem Laser abgerufen. Eine Energie dieser Pulse wird dann über das Pulsenergiesignal vorgegeben, welches entsprechend der Bearbeitungsinformation zeitlich korreliert mit dem Taktsignal variiert wird. Unter einer zeitlich korrelierten Variation wird verstanden, dass eine Anpassung des Wertes des Pulsenergiesignals so erfolgt, dass das Pulsenergiesignal jeweils zu einem durch das Taktsignal festgelegten Abrufzeitpunkt für einen Laserpuls einen Wert aufweist, der die gewünschte Pulsenergie für diesen abgerufenen Laserpuls angibt.

Unter zeitlich äquidistant wird hier ein gleichbleibender zeitlicher Abstand zwischen jeweils zwei aufeinander folgenden Ereignissen, beispielsweise Rechteckpulsen, verstanden. Ein zeitlich äquidistanter Takt weist zumindest während mehrerer Taktzyklen eine konstante Taktfrequenz auf.

In der Praxis hat es sich gezeigt, dass einige Pulslasersysteme, insbesondere diodengepumpte Faserlaser, eine Tiefpasscharakteristik hinsichtlich einer zeitlichen Variation der Pulsenergie, insbesondere beim Erhöhen der Pulsenergie, aufweisen. Dies bedeutet, dass bei einem Wechsel von einer beispielsweise minimalen Pulsenergie zu einer maximalen Pulsenergie die tatsächliche Pulsenergie nach dem angeforderten Wechsel nicht der angeforderten Pulsenergie entspricht. Die Pulsenergien, die zeitlich nacheinander folgende Laserpulse zeigen, steigen zunächst über einige Pulse an, bis die maximale Pulsenergie erreicht ist.

Sollen mit einer solchen Vorrichtung beispielsweise Bearbeitungsinformationen umgesetzt werden, die eine Mikroschrift repräsentieren, bei der einzelne Strukturen, z.B. Linien von Schriftzeichen, eine Linienstärke aufweisen, die einem oder wenigen Pixeln entsprechen, so ist eine kontrastreiche Umsetzung mit der aus dem Stand der Technik bekannten Vorrichtung nicht befriedigend möglich.

Aus der DE 11 2005 003 088 T5 ist eine Laservorrichtung bekannt, die zwei Positioniermechanismen aufweist, über die ein Laserstrahl wechselnd auf unterschiedliche Zielbereiche gerichtet werden kann. Hierdurch sollen möglichst alle Pulse des Lasers für eine Materialbearbeitung genutzt werden und Schwankungen einer Pulsenergie vermieden werden. Diese Laserbearbeitungsvorrichtung ist aufwendig, da diese zwei Positioniermechanismen benötigt.

Laserbearbeitungsvorrichtungen werden beschrieben z.B. in US5226051 A und/oder in US 2002/0033873 A.

Aufgabe der Erfindung ist es daher, eine Laservorrichtung, ein Verfahren und eine Einrichtung zu schaffen, die ohne einen großen konstruktiven Aufwand Nutzungen der aus dem aus dem Stand der Technik bekannten Vorrichtungen oder Verfahren erlauben und die oben genannten Nachteile zu beseitigen.

### Grundidee der Erfindung

Die Erfindung basiert auf der Grundidee, die bisher zur Steuerung des Pulslasers verwendeten Signale mit einer zusätzlichen Einrichtung zu verarbeiten und modifizierte Signale für die Steuerung des Pulslasers auszugeben, so dass der Pulslaser bei Anforderung von Pulsen sofort eine gewünschte Pulsenergie auch für einzelne Pulse bereitstellen kann.

Insbesondere wird eine Laserbearbeitungsvorrichtung zur Laserbearbeitung eines Gegenstands, insbesondere zur Lasermarkierung eines auf Kunststoffbasis hergestellten Dokuments, vorgeschlagen. Die Laserbearbeitungsvorrichtung umfasst einen hinsichtlich seiner Pulsenergie und eines zeitlichen Abrufs von Laserpulsen steuerbaren Pulslaser, welcher einen Energiesteuereingang zum Empfangen eines analogen Signals, dessen Spannung die Laserpulsenergie steuert, und
einen Abrufeingang zum Empfangen eines Signals, mittels dessen zeitlich ein Abrufen der Laserpulse steuerbar ist, umfasst, eine Steuereinrichtung, die ausgebildet ist, anhand einer Bearbeitungsinformation ein Pulsenergiesignal zu erzeugen, welches zeitlich korreliert mit einem Taktsignal Spannungswerte annimmt, die eine Pulsenergie für die Laserpulse repräsentieren, welche durch das Taktsignal abrufbar sind, wobei das Pulsenergiesignal und das Taktsignal in eine Filtereinrichtung, geführt sind, wobei die Filtereinrichtung eine Vergleichereinrichtung zum Vergleichen einer Spannung des Pulsenergiesignals mit mindestens einer vorgebbaren Schwellenwertbedingung und Erzeugen eines logischen Ergebnissignals; ein Gatter, auf das das Taktsignal geführt ist, wobei das Gatter durch das logische Ergebnissignal gesteuert wird und hierüber ein Abrufsignal erzeugt und ausgibt, sowie eine einstellbare Spannungsquelle umfasst, die ein Energiesteuersignal mit einer Spannung gemäß einer Vorgabe für eine Steuerspannung ausgibt, vorgeschlagen.

Das logische Ergebnissignal kann zwei physikalische Zustände annehmen, die den logischen Werten WAHR und FALSCH zugeordnet werden.

Als Gatter kann jede steuerbare Einrichtung, insbesondere ein UND-Gatter dienen, die gesteuert durch das logischen Ergebnissignal das Taktsignal in ein Abrufsignal wandelt, wobei das Gatter in einem Zustand eine in dem Taktsignals enthaltene Information "passieren lässt" und diese dem Abrufsignal aufprägt und in einem anderen Zustand diese Informationsweitergabe "blockiert" wird und eine Aufprägung auf das Abrufsignal unterbleibt. Ist das Gatter beispielsweise als logische Und-Gatter-Schaltung ausgebildet, so werden das Taktsignal und das logische Ergebnissignal auf die Eingänge der logischen Und-Gatter-Schaltung geführt. Diese wird so dimensioniert, dass sowohl die im Taktsignals auftretenden Spannungspegel als auch die im logischen Ergebnissignal auftretenden Spannungspegel für den jeweiligen Eingang der logische Und-Gatter-Schaltung als zwei unterschiedliche logische Zustände erkannt werden. Dieses bedeutet, dass die in dem Taktsignal auftretenden Zustände ebenfalls jeweils einem der logischen Werte Wahr und FALSCH zugeordnet werden. Das Ausgangssignal der logischen Und-Gatter-Schaltung ist in diesem Fall dann das Abrufsignal, das gemäß einer logischen Und-Verknüpfung aus den logischen Werten des logischen Ergebnissignals und des Taktsignals erzeugt wird.

Ferner wird eine Filtereinrichtung für eine Lasersteuerung eines hinsichtlich seiner Pulsenergie und eines zeitlichen Abrufs von Laserpulsen steuerbaren Pulslaser, welcher einen Energiesteuereingang zum Empfangen eines analogen Signals, dessen Spannung die Laserpulsenergie steuert und einen Abrufeingang zum Empfangen eines Signals, mittels dessen zeitlich ein Abrufen der Laserpulse steuerbar ist, umfasst, wobei die Filtereinrichtung einen Pulsenergieeingang zum Empfangen eines Pulsenergiesignal, welches zeitlich korreliert mit einem Taktsignal Spannungswerte annimmt, die eine Pulsenergie für die Laserpulse repräsentieren, welche durch das Taktsignal abrufbar sind, und einen Takteingang zum Empfangen des Taktsignals sowie einen Energiesteuersignalausgang und einen Abrufsignalausgang und ferner eine Vergleichereinrichtung zum Vergleichen einer Spannung des Pulsenergiesignals mit mindestens einer vorgebbaren Schwellenwertbedingung und Erzeugen eines logischen Ergebnissignals und eine Gatterschaltung, auf die das Taktsignal geführt ist und welche durch das logische Ergebnissignal gesteuert wird und hierüber ein Abrufsignal erzeugt und an dem Abrufsignalausgang ausgibt sowie eine einstellbare Spannungsquelle, die ein Energiesteuersignal mit einer vorgebbaren Steuerspannung an dem Energiesteuersignalausgang ausgibt, umfasst, vorgeschlagen.

Zusätzlich wird ein Verfahren zum Steuern eines hinsichtlich seiner Pulsenergie und eines zeitlichen Abrufs von Laserpulsen steuerbaren Pulslaser bei einer Materialbearbeitung eines Gegenstands, insbesondere bei der Markierung eines kunststoffbasierten Dokuments, vorgeschlagen, welches die Schritte umfasst: Vergleichen eines Pulsenergiesignals, welches zeitlich korreliert mit einem Taktsignal Spannungswerte annimmt, die eine Pulsenergie für die Laserpulse zum Bearbeiten repräsentieren, mit einer Schwellenwertbedingung und Erzeugen eines logischen Ergebnissignals; Führen des Taktsignals auf ein Gatter und Steuern des Gatters mittels des logischen Ergebnissignals und Erzeugen eines Abrufsignals hierüber; Bereitstellen eines Energiesignals, welches eine Spannung gemäß einer Vorgabe für eine Steuerspannung aufweist; und Verwenden des Abrufsignals und des Energiesignals zum Steuern des Pulslasers. Vorzugsweise erfolgt die Steuerung des Gatters so, dass das Abrufsignal in dem Gatter so erzeugt wird, dass die Spannung des Abrufsignals der des Taktsignals für einen der logischen Zustände des logischen Ergebnissignals folgt und ansonsten einen vorgegebenen Wert annimmt, beispielsweise 0V.

Die vorgeschlagene Laservorrichtung, die vorgeschlagene Filtereinrichtung und das vorgeschlagene Verfahren sind besonders für eine Verwendung zum Markieren eines Dokuments mit personalisierenden und/oder individualisierenden Informationen, d.h. zum Einbringen dieser Informationen, geeignet.

Der Vorteil liegt darin, dass Komponenten, die ein entsprechendes Pulsenergiesignal bereitstellen, unverändert genutzt werden können und durch die zusätzliche Filtereinrichtung die Steuersignal in einfacher Weise abgewandelt werden, um anschließend in der Lage zu sein, auch kleine Strukturen mit starkem Kontrast zu erzeugen. Über die Wahl der Schwellenwertbedingung kann festgelegt werden, dass nur solcher Informationsgehalt der Bearbeitungsinformationen zur Bearbeitung des Gegenstands verwendet wird, für dessen Bearbeitung beispielsweise eine bestimmte Pulsenergie überschritten wird oder dessen Pulsenergie beispielsweise in einem bestimmten Energiefenster liegt. Hierdurch wird die Möglichkeit geschaffen, beispielsweise Wert- und/oder Sicherheitsdokumente wie Reisepässe, Führerscheine oder Ähnliches mit Mikroschrift oder mehrdimensionalen Punktcodes (z.B. 3D-"Barcodes") zu versehen, welche nur bearbeitete oder nicht bearbeitete, beispielsweise markierte (optisch veränderte) oder nicht markierte (optisch unveränderte) Positionen bzw. Bildpunkte, aufweisen. Dennoch kann die Markierung mit maximalem Kontrast ausgeführt werden. Tiefpasseigenschaften herkömmlicher Faserlaser können durch die Erfindung "umgangen" werden. Eine Markierung mit hohem Kontrast wird hierdurch ermöglicht. Es können Schriftzeichen, Bilder etc. mit hohem Kontrast in einem Dokument erzeugt werden.

### Definitionen

Als Wert- und/oder Sicherheitsdokumente werden all jene Dokumente angesehen, die durch Sicherheitsmerkmale gegenüber einem Nachahmen, Verfälschen, Duplizieren oder Ähnlichem geschützt sind. Sicherheitsdokumente umfassen insbesondere Reisepässe, Personalausweise, Identitätskarten, Führerscheine, Visa, Etiketten zur Produktabsicherung, entsprechende Verpackungen und Dokumente, die einen Wert verkörpern wie beispielsweise Banknoten, Schecks, aber auch Bankkarten, Telefonkarten, Wertkarten, um nur einige zu nennen.

Sicherheitsmerkmale sind Merkmale, die ein Nachahmen, Fälschen und/oder Verfälschen, Duplizieren oder andere Manipulationen an den Wert- und/oder Sicherheitsdokumenten zumindest erschweren oder gänzlich unmöglich machen. Beispielsweise können besondere Druckverfahren oder andere Markierungsverfahren, aber auch Hologramme, in Dokumente eingefügte Strukturen oder Gegenstände wie Mikrochips und Antennen oder Ähnliches als Sicherheitsmerkmal genutzt werden. Dem Fachmann sind vielfältige Sicherheitsmerkmale bekannt, die einzeln oder in Kombination in Wert- und/oder Sicherheitsdokumenten eingesetzt werden können.

Als Taktsignal wird ein elektrisches und/oder optisches Signal angesehen, welches Pulse umfasst, die Flanken aufweisen, welche in kurzen Zeiträumen eine starke Signaländerung darstellen. Beispielsweise sind Signale mit Rechteckpulsen als Taktsignale geeignet, wobei die Flanken der Rechteckpulse zur Festlegung eines Zeitpunktes verwendet werden können. Es versteht sich für den Fachmann, dass auch andere Pulse mit steilen Flanken als Taktsignale verwendet werden können. Das Taktsignal ist hierbei angepasst an den jeweiligen Pulslaser zu wählen, dessen Pulse über das Taktsignal abrufbar sein sollen. Die Pulse des Taktsignals, über die ein zeitlicher Abruf eines Laserpulses auslösbar ist, werden als Taktpulse bezeichnet. Ein Signal zum Abrufen kann auch als Abrufsignal bezeichnet werden, wobei dessen Pulse, die einen zeitlichen Abruf der Laserpulse steuern, als Abrufpulse bezeichnet werden.

Der Lichtzug, der von einem Pulslaser ausgegeben wird, wird als Laserstrahl betrachtet. Ein Laserstrahl gibt somit den optischen Weg an, entlang dessen sich die als Laserpulse bezeichneten Lichtpulse ausbreiten.

Unter dem Positionieren von Laserpulsen wird ein Richten des Laserstrahls auf eine Position eines Gegenstands verstanden. Hierüber wird eine Position einer Wechselwirkung eines Laserpulses mit dem Gegenstand festgelegt und somit der Laserpuls "positioniert".

Als individualisierende Informationen werden solche angesehen, die aus einer Gesamtheit von gleichartigen Gegenständen eine Gruppe oder einzelne dieser Gegenstände individuell kennzeichnen. Eine Angabe "Diplomatenreisepass" individualisiert eine Gruppe von Reisepässen aus der Gesamtheit der Reisepässe eines Staates. Eine Seriennummer individualisiert hingegen einen einzelnen Reisepass aus der Gruppe der Gesamtheit der Reisepässe. Als personalisierende Informationen werden solche Informationen angesehen, die einer Person zugeordnet sind und für diese zumindest teilweise individuell sind. Die personalisierenden Informationen können beispielsweise einen Namen, ein Geburtsdatum, einen Geburtsort, eine Anschrift oder auch ein Gesichtsbild oder weitere biometrische Merkmale oder Ähnliches umfassen.

### Bevorzugte Ausführungsformen

Um Mikroschrift oder feine Muster auf einen Gegenstand zu markieren bzw. einen Gegenstand in einem feinen Bearbeitungsraster bearbeiten zu können, ist bei einer Ausführungsform die Vergleichereinrichtung ausgebildet, Schwellenwertbedingungen auszuwerten, die einen unteren Grenzschwellenwert umfassen, und vorgesehen, dass das logische Ergebnissignal den Wert WAHR annimmt, wenn die Spannung des Pulsenergiesignals den unteren Grenzschwellenwert übersteigt, und ansonsten den Wert FALSCH annimmt oder alternativ das logische Ergebnissignal den Wert WAHR annimmt, wenn die Spannung des Pulsenergiesignals den unteren Grenzschwellenwert unterschreitet, und ansonsten den Wert FALSCH annimmt. Je nach Ausgestaltung der verwendeten Gatterschaltung bzw. Ausgestaltung des Taktsignals kann es von Vorteil sein, beim Überschreiten des Grenzschwellenwerts durch die Spannung des Pulsenergiesignals ein Ergebnissignal zu erzeugen, welches den Wert WAHR annimmt, oder alternativ ein Ergebnissignal zu erzeugen, welches den Wert FALSCH annimmt. Eine solche Ausführungsform ist besonders geeignet, um "Schwarz-Weiß"-Informationen bei der Bearbeitung des Gegenstands, insbesondere der Markierung des Gegenstands umzusetzen. Da ein Spannungswert immer bezüglich eines Referenzpotentials zu betrachten ist, kann eine maximale Pulsenergie mit einer positiven Spannung oder alternativ mit einer negativen Spannung assoziiert werden. Abhängig von dieser Wahl ist ein Vorliegen einer hohen Pulsenergie mit einem überschreiten eines Grenzschwellenwertes oder einem Unterschreiten eines Grenzschwellenwertes verknüpft. Um in der Lage zu sein, nicht nur mit einer einzigen Pulsenergie Bearbeitungen vornehmen zu können, ist bei einer Weiterbildung vorgesehen, dass die Filtereinrichtung eine Umschalteinrichtung aufweist und in einem Schaltzustand, der als Filterzustand bezeichnet ist, die Spannungsquelle mit dem Energiesignalsteuerausgang verbunden ist und in einem anderen Schaltzustand, der als Umgehungszustand bezeichnet ist, das an dem Steuereingang empfangene Pulsenergiesignal auf den Energiesteuerausgang geführt ist. Während in dem Filterzustand eine Bearbeitung in einem feinen räumlichen Raster bei starkem Kontrast, jedoch nur mit einer einzigen Pulsenergie möglich ist, ist in dem anderen sogenannten Umgehungszustand der Umschalteinrichtung eine Bearbeitung mit variabler Pulsenergie möglich. So kann beispielsweise ein Gesichtsbild einer Person mit Graustufenwerten auf den Gegenstand, beispielsweise ein Passdokument, markiert werden, d.h. beispielsweise in einem Passdokument erzeugt werden. Im Filterzustand ist es hingegen möglich, Mikroschrift zu erzeugen, welche Linienbreiten im Bereich einer oder weniger Markierungspunkte aufweist. Ein Ansteuern des Pulslasers in dem Umgehungszustand wird als Ansteuern im Umgehungsverfahrensmodus bezeichnet, bei dem das Pulsenergiesignal als das Energiesteuersignal und das Taktsignal als Abrufsignal verwendet werden.

Der nur verzögerte Energieanstieg der Pulsenergie im Umgehungszustand (bzw. bei einer Ansteuerung im Umgehungsverfahrensmodus) bei einem Wechsel der abgeforderten Pulsenergie wirkt sich bei einer Markierung bzw. Erzeugung von Graustufenbildern dahingehend aus, dass diese nicht so kontrastreich abgebildet werden, wie die ursprüngliche Bearbeitungsinformation, welches die Bildinformation ist, dieses vorgegeben hat. Während schwarzen Bildpunkten eine maximale Spannung zugeordnet wird, werden Graustufenwerten, je heller sie werden, geringere Spannungswerte zugeordnet. Treten in dem Graustufenbild Sprünge von sehr hellen Grauwerten zu sehr dunklen oder schwarzen Werten auf, so ist die Laservorrichtung, wenn die Umschalteinrichtung der Filtereinrichtung im Umgehungszustand betrieben wird, nicht in der Lage, die Pulsenergie adäquat anzupassen, so dass solche Übergänge "verwaschen" sind und nicht die gewünschte Kontrastschärfe aufweisen. Um dieses zu verbessern, ist es möglich, an solchen Kontrastübergängen eine Nachbearbeitung in der Weise vorzunehmen, dass eine erneute Bearbeitung mit einer vorgegebenen Pulsenergie ausgeführt wird. Während der Nachbearbeitung wird die Umschalteinrichtung dann in dem Filterzustand betrieben. Dieses bedeutet, dass der Pulslaser während des Ausgebens des Pulsenergiesignals gemäß der Bearbeitungsinformationen mittels des Umgehungsverfahrensmodus angesteuert wird und ansonsten nicht, ansonsten also ein Vergleichen eines Pulsenergiesignals mit der Schwellenwertbedingung und Erzeugen des logischen Ergebnissignals und Führen des Taktsignals auf das Gatter und Steuern des Gatters mittels des logischen Ergebnissignals und Erzeugen eines Abrufsignals hierüber erfolgt.

Bei einer bevorzugten Weiterbildung, die eine solche verbesserte Markierung von Graustufenbildern ermöglicht, ist vorgesehen, dass die Steuereinrichtung eine Informationsfiltereinrichtung umfasst, welche eine Hochpassfilterung der Bearbeitungsinformation ausführt und hierbei eine Kantenbearbeitungsinformation erstellt. Die Kantenbearbeitungsinformation ist eine Information, die angibt, an welchen Positionen große Kontrastunterschiede von hell nach dunkel in der zu erzeugenden grafischen Information auftreten. Ferner ist die Steuereinrichtung so ausgebildet, dass zunächst Pulsenergiesignale gemäß der Bearbeitungsinformation und anschließend gemäß der Kantenbearbeitungsinformation ausgegeben werden. Die Hochpassfilterung der Bearbeitungsinformationen liefert die Kantenbearbeitungsinformationen. Geht man davon aus, dass jedem Graustufenwert bzw. Schwarz ein Wert zugeordnet ist, welcher mit dem Schwärzungsgrad zunimmt, und führt eine Hochpassfilterung aus, so erhält man für jede Bearbeitungsposition einen hochpassgefilterten Wert. Diese Werte sind an jenen Stellen besonders groß, an denen eine besonders große Grauwertveränderung auftritt. Somit ist es möglich, an den Stellen, an denen die Kantenbearbeitungsinformation große Werte aufweisen, eine zusätzliche Lasermarkierung auszuführen. Hierbei können die Kantenbearbeitungsinformationen in gleicher Weise wie die Bearbeitungsinformationen zur Erzeugung des Pulsenergiesignals verwendet werden. Durch geeignete Wahl der Schwellenwertenergie für die Schwellenwertvorgabe und eine entsprechend angepasste Vorgabe für die Steuerspannung kann die Kontrastverbesserung an den Kanten in einem zweiten Markierungsdurchgang verbessert werden.

Bei einer anderen Ausführungsform kann vorgesehen sein, dass die Bearbeitungsinformation mehrfach ausgegeben wird und jeweils lediglich Markierungen für Spannungen des Pulsenergiesignals ausgeführt werden, die einem bestimmten Graustufenwert oder einem Bereich von Graustufenwerten entsprechen. Hierfür ist es in einer Ausführungsform vorgesehen, dass die Vergleichereinrichtung ausgebildet ist, Schwellenwertbedingungen auszuwerten, die einen Vorgabe-Spannungsbereich umfassen, und das logische Ergebnissignal den Wert WAHR annimmt, wenn die Spannung des Pulsenergiesignals in dem Vorgabe-Spannungsbereich liegt, und ansonsten den Wert FALSCH annimmt oder alternativ das logische Ergebnissignal den Wert FALSCH annimmt, wenn die Spannung des Pulsenergiesignals in dem Vorgabe-Spannungsbereich liegt, und ansonsten den Wert WAHR annimmt. Die unterschiedlichen Alternativen ermöglichen unterschiedliche Gatterausgestaltungen. Das Gatter kann die Information des Taktsignals im logischen Zustand WAHR oder bei einer anderen Ausgestaltung im Zustand FALSCH vornehmen.

Bei einer anderen Ausführungsform ist die Vergleichereinrichtung so ausgebildet, dass diese Schwellenwertbedingungen auswerten kann, die einen Vorgabe-Spannungsbereich umfassen. Dieser kann durch einen unteren Grenzschwellenwert und durch einen oberen Grenzschwellenwert angegeben sein. Bei dieser anderen Ausführungsform umfasst die Vergleichereinrichtung beispielsweise zwei Vergleicherschaltungen, die die Spannung des Pulsenergiesignals mit den Grenzschwellenwerten vergleichen. Das Ergebnissignal wird auf den Wert WAHR gesetzt, wenn die Spannung oberhalb des unter Grenzschwellenwert und unterhalb des oberen Grenzschwellenwerts liegt, und ansonsten auf den Wert FALSCH gesetzt. Diese Ausführungsform ermöglicht es, Bearbeitungsschritte mit einer vorgegeben Pulsenergie auszuführen, die gemäß der Bearbeitungsinformation mit Pulsenergien ausgeführt werden sollten, die in dem Bereich liegen, der durch den Vorgabe-Spannungsbereich repräsentiert ist. Es sind auch andere Ausgestaltungen möglich, bei denen die Schwellenwertbedingungen über einen Grenzschwellenwert und eine Intervallspannung angeben wird.

Um die zeitliche Koordination einer Erzeugung der Laserpulse und einer Positionierung des Laserstrahls auf bzw. in dem zu bearbeitenden Gegenstand zu erleichtern, ist bei einer Ausführungsform vorgesehen, dass die Steuereinrichtung ausgebildet ist, zusätzlich eine Strahlführungseinrichtung, angepasst an das Pulsenergiesignal und das Taktsignal, d. h. zeitlich korreliert mit diesen, zu steuern.

Bei einer bevorzugten Ausführungsform umfasst die Filtereinrichtung eine Schnittstelle, über die die Vorgabe der Steuerspannung und/oder die Schwellenwertbedingung und/oder eine Schaltvorgabe zum Umschalten der Umschalteinrichtung erfassbar sind. Bei einer Ausführungsform kann vorgesehen sein, dass die Umschalteinrichtung in Abhängigkeit von der Vorgabe für die Steuerspannung ihren Schaltzustand wählt. Ist die Vorgabe für die Steuerspannung beispielsweise so gewählt, dass diese einen Wert null annimmt und hiermit gekoppelt die einstellbare Spannungsquelle einen Wert von null Volt am Energiesignalausgang liefern würde, kann dies als eine Anwahl des Umgehungsschaltzustands interpretiert werden und die Umschalteinrichtung in den Umgehungszustand überführt werden. Weicht die Vorgabe für die Steuerspannung von dem Wert null ab, so wird in den Filterzustand gewechselt. Bei der Schnittstelle kann es sich um eine beliebige Schnittstelle zum Übermitteln der Information für die gewünschten einzustellenden Spannung handeln, beispielsweise kann es sich um eine analoge Schnittstelle handeln, wobei jedem anlegten Spannungswert eine einzustellende Spannung zugeordnet ist. Alternativ kommen auch Schnittstellen in Betracht, auf denen Kommunikationsprotokolle aufgesetzt werden können, beispielsweise eine RS232-, USB-Schnittstelle oder Ähnliches.

Bei einer Ausführungsform ist die Steuereinrichtung ausgebildet, eine der Bearbeitungsinformation zugeordnete Schwellenwertbedingung und/oder der Bearbeitungsinformation zugeordnete Vorgabe für die Steuerspannung und/oder gegebenenfalls eine Schaltzustandsvorgabe und/oder eine der Kantenbeärbeitungsinformation zugeordnete Schwellenwertbedingung und/oder der Kantenbearbeitungsinformation zugeordnete Vorgabe für die Steuerspannung zu erzeugen und auszugeben.

Bei einer bevorzugten Ausführungsform ist der Pulslaser ein Faserlaser, vorzugsweise ein diodengepumpter Faserlaser. Die Strahlführungseinrichtung ist bei einer bevorzugten Ausführungsform unter Verwendung mindestens eines Galvanometers realisiert.

Die Merkmale des erfindungsgemäßen Verfahrens weisen dieselben Vorteile wie die der Laservorrichtung auf. Entsprechendes gilt für die Merkmale der Filtereinrichtung, die dieselben Vorteile wie die der Laservorrichtung und des Verfahrens aufweisen.

Nachfolgend wird die Erfindung unter Bezugnahme auf eine Zeichnung näher erläutert. Hierbei zeigen:
- Fig. 1: eine schematische Darstellung einer Laservorrichtung nach dem Stand der Technik;
- Fig. 2: eine schematische Darstellung einer Ausführungsform einer Laserbearbeitungsvorrichtung.

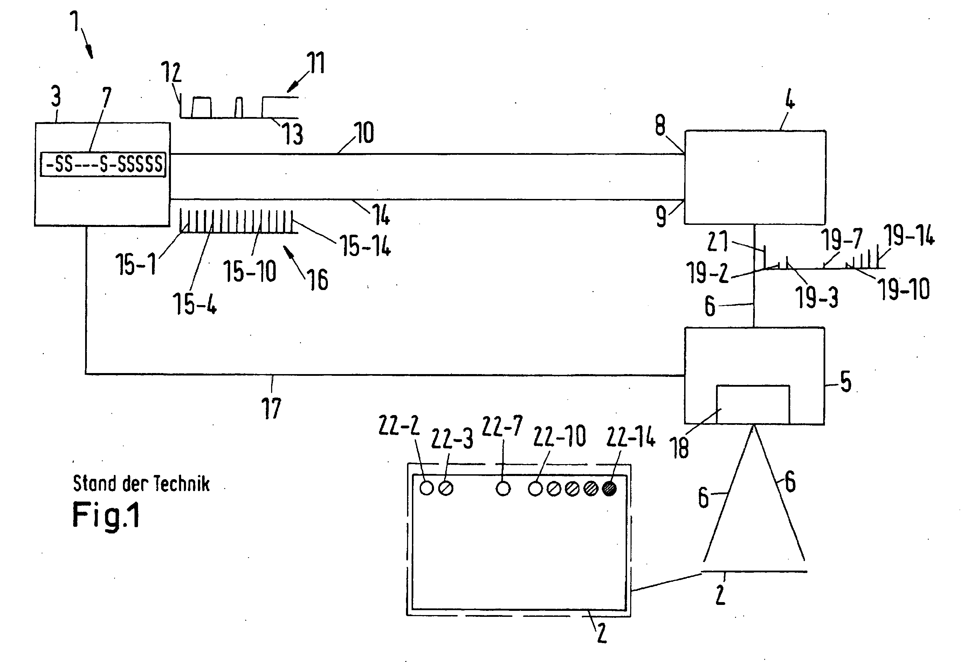

In Fig. 1 ist schematisch eine Laserbearbeitungsvorrichtung 1 zur Bearbeitung eines Gegenstands 2 dargestellt. Die Laserbearbeitungsvorrichtung umfasst eine Steuereinrichtung 3, welche zum einen einen Pulslaser 4 und andererseits eine Stahlführungseinrichtung 5 steuert. Die Stahlführungseinrichtung 5 führt einen Laserstrahl 6 des Pulslasers 4 gezielt auf eine Position des Gegenstands 2.

Eine Bearbeitung, bzw. Markierung des Gegenstands 2 wird gemäß einer Bearbeitungsinformation 7 vorgenommen. In dem vereinfacht dargestellten Beispiel repräsentiert die Bearbeitungsinformation eine pixelierte, d.h. in Bildpunkte zerlegte Zeile. In dem dargestellten Beispiel sollen die den Bildpunkten zugeordneten Positionen auf dem Gegenstand 2 entweder unmarkiert bleiben, was durch ein "-" symbolisiert ist, oder geschwärzt werden, was durch ein "S" gekennzeichnet ist. Wird der Gegenstand an einer Position mit einem Laserpuls, der eine Pulsenergie unterhalb einer Mindestenergieschwelle aufweist, bearbeitet, so tritt in der Regel keine Materialveränderung auf. Um eine Schwärzung zu erreichen, wird gemäß der Auslegung des hier beschriebenen Pulslasers eine maximale Pulsenergie benötigt. Es versteht sich für den Fachmann, dass Pulslaser existieren, deren Laserpulse eine ausreichende gewünschte Schwärzung mit einem einzigen Laserpuls erreichen können, auch wenn der Pulslaser nicht mit der maximal möglichen Pulsenergie betrieben wird. Im Folgenden wird jeweils davon ausgegangen, dass der Pulslaser so gewählt und dimensioniert ist, dass eine maximale Pulsenergie eine optimale Schwärzung des Gegenstands bewirkt, jedoch keine darüber hinaus gehende Zerstörung verursacht oder eine Markierung benachbarter Orte, die andere Bildpunkte darstellen, beeinträchtigt wird.

Im Optimalfall weisen die Laserpulse der Laserstrahlung, die auf Orte treffen, welche nicht markiert werden sollen, eine Pulsenergie 0 auf. Dies ist gleichbedeutend mit der Tatsache, dass der Laser keinen Puls abgibt.

Im Folgenden wird dies nicht unterschieden, ob kein Laserpuls oder ein Laserpuls mit einer Energie unterhalb der Mindestenergieschwelle erzeugt wird. In beiden Fällen wird von Laserpulsen mit einer Pulsenergie 0 gesprochen. Hierunter werden nicht real erzeugte Laserpulse und solche Laserpulse verstanden, die keine ausreichende Energie aufweisen, um eine Materialveränderung an dem Gegenstand vorzunehmen.

Der Pulslaser 4 verfügt über einen Energiesteuereingang 8, an den ein analoges Signal anlegbar ist, dessen Spannung eine Laserpulsenergie steuert. Je größer die angelegte Spannung ist, desto größer ist die von dem Laser ausgegebene Pulsenergie. Zusätzlich verfügt der Pulslaser 4 über einen Abrufeingang 9 zum Empfangen eines Signals, mittels dessen zeitlich ein Abrufen der Laserpulse steuerbar ist.

Um diese Energiesteuerung vorzunehmen, erzeugt die Steuereinrichtung 3 anhand der Bearbeitungsinformation 7 ein Pulsenergiesignal 10, dessen Spannungsverlauf schematisch grafisch aufgetragen ist. Aufgetragen ist die Spannung 12 gegen die Zeit 13. Die Erzeugung des Pulsenergiesignals 10 erfolgt zeitlich korreliert mit einem Taktsignal 14, welches kurze Taktpulse 15, welche oft auch als Triggerpulse bezeichnet werden, in äquidistanten Zeitabständen aufweist, wie dies in der schematischen grafischen Darstellung 16 angedeutet ist. Erneut ist die Spannung gegen die Zeit aufgetragen. Das Pulsenergiesignal 10 ist mit dem Energiesteuereingang und das Taktsignal 14 mit dem Abrufeingang 9 des Pulslasers 4 verbunden.

Das Pulsenergiesignal 10 weist eine minimale Spannung zu Zeiten auf, die mit Taktpulsen 15-1, 15-4 bis 15-6, 15-8 und 15-9 des Taktsignals 14 korrespondieren, die Laserpulse 19-1, 19-4 bis 19-6, 19-8 und 19-9 abrufen, die über die Strahlführungseinrichtung 5 an Orte des Gegenstands 2 geführt werden, die nicht markiert werden sollen. Entsprechend weist das Pulsenergiesignal 10 eine maximale Spannung zu jenen Zeiten auf, die mit Taktpulsen 15-2, 15-3, 15-7,15-10 bis 15-14 des Taktsignals 14 korrespondieren, die Laserpulse 19-2, 19-3, 19-7, 19-10 bis 19-14 abrufen, die an Orte geführt werden, an denen der Gegenstand 2 markiert, d.h. geschwärzt, werden soll.

Es ergibt sich, dass die Steuerung der Strahlführungseinrichtung 5 angepasst an das Taktsignal 14, d.h. zeitlich korreliert mit diesem Taktsignal, über ein Steuersignal 17 erfolgt, welches von der Steuereinrichtung 3 erzeugt wird. Die Strahlführungseinrichtung 5 umfasst vorzugsweise ein Galvanometer 18 zum Bewirken der Strahlführung des Laserstrahls 6.

Da der Pulslaser 4 eine Tiefpasscharakteristik aufweist, weisen die erzeugten Laserpulse 19-2, 19-3, 19-7, 19-10 bis 19-14, welche Schwärzungen bewirken sollen, nicht alle die hierfür erforderliche maximale Laserenergie auf. Wie sich aus der schematischen grafischen Darstellung 20 ergibt, in der eine Pulsenergie 21 gegen die Zeit 13 aufgetragen ist.

Zu erkennen ist, dass die Pulsenergie der einzelnen Laserpulse 19 nach einem Wechsel der Spannung des Pulsenergiesignals von 0 auf den Maximalwert, beispielsweise 10 V, nur Schrittweise zunimmt. Erst nach etwa 3 bis 5 zeitlich unmittelbar aufeinanderfolgenden Laserpulsen 19 mit einer angeforderten maximalen Pulsenergie wird auch diese maximale Pulsenergie tatsächlich erreicht.

Im Ergebnis äußert sich dieses darin, dass eine Reihe von Bildpunkten 22-1 bis.22-14 (Pixeln) unterschiedliche Graustufenwerte aufweisen, jedoch nicht schwarz sind. Insbesondere ein Bildpunkt 22-7, dessen benachbarte Bildpunkte 22-6, 22-8 nicht markiert sind, (und auch nicht markiert sein sollen) weist nur eine helle Graustufe auf. Dieses ist unbefriedigend, da ein Kontrast unzureichend ist.

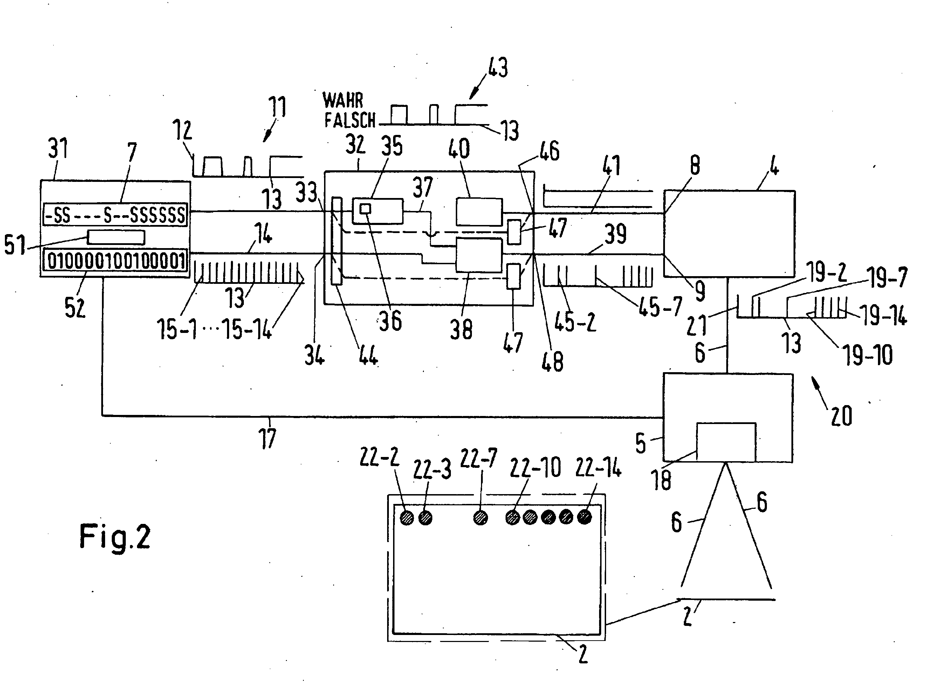

In Fig. 2 ist eine Ausführungsform einer Laserbearbeitungsvorrichtung 31 schematisch dargestellt, mit der anhand derselben Bearbeitungsinformation 7 eine Markierung eines als Dokument ausgestalteten Gegenstands 2 vorgenommen wird. Gleiche oder gleich wirkende technische Merkmale sind in allen Figuren mit denselben Bezugszeichen gekennzeichnet.

Der Pulslaser 4 mit dem Energiesteuereingang 8 und dem Abrufeingang 9 erzeugt, wie bei der Laserverarbeitungsvorrichtung 1 nach dem Stand der Technik, die in Fig. 1 gezeigt ist, einen Laserstrahl 6, der aus einzelnen Laserpulsen 19 zusammensetzt ist. Der Laserstrahl 6 wird von der Strahlführungseinrichtung 5 geführt, die hierfür vorzugsweise ein Galvanometer 18 umfasst.

Wie bei der Ausführungsform nach dem Stand der Technik erzeugt die Steuereinrichtung 31 anhand der Bearbeitungsinformation ein Pulsenergiesignal 10, dessen Spannungsverlauf 11 dem gleicht, das von der Steuereinrichtung 3 nach dem Stand der Technik erzeugt wird.

Bei der Ausführungsform einer Laserbearbeitungsvorrichtung 30 nach Fig. 2 werden das Pulsenergiesignal 10 und das Taktsignal 11 nicht unmittelbar auf den Energiesteuereingang 8 und den Abrufeingang 9 des Pulslasers 4 geführt. Vielmehr ist eine Filtereinrichtung 32 zwischen der Steuereinrichtung 31 und dem Laser 4 vorgesehen.

Die Filtereinrichtung 32 umfasst einen Pulsenergieeingang 33 zum Empfangen des Pulsenergiesignals 10. Zusätzlich umfasst die Filtereinrichtung 32 einen Taktsignaleingang 34 zum Empfangen des Taktsignals 14.

Eine Spannung des Pulsenergiesignals 10 wird in einer Vergleichereinrichtung 35 mit einer Schwellenwertbedingung 36 vergleichen. Das Ergebnis des Vergleichs wird mittels eines logischen Ergebnissignals 37 repräsentiert. Über eine grafische Darstellung 43 ist das Vergleichsergebnis gegen die Zeit 13 exemplarisch aufgetragen. Bei einer Ausführungsform nimmt das Ergebnissignal 37 den logischen Wert WAHR an, wenn die Schwellenwertbedingung erfüllt ist, und andernfalls den Wert FALSCH. Da eine Schwellenwertbedingung auch logisch negiert formuliert werden kann, kann bei anderen Ausführungsformen die Wahl entgegengesetzt getroffen werden. Eine Schwellenwertbedingung kann beispielsweise formuliert sein: "Ist die Spannung des Pulsenergiesignals größer als ein unterer Grenzschwellenwert?". Alternativ könnte die Schwellenwertbedingung formuliert sein: "Unterschreitet die Spannung des Pulsenergiesignals den unteren Grenzschwellenwert?" Abhängig von der Wahl der Schwellenwertbedingung wäre diese somit für einen gegebenen Spannungswert des Pulsenergiesignals erfüllt oder nicht. Im Folgenden wird jedoch davon ausgegangen, dass das logische Ergebnissignal 37 den Wert WAHR annimmt, wenn die Schwellenwertbedingung 36 erfüllt ist und ansonsten den Wert FALSCH.

In der Regel wird das logische Signal WAHR mit einem Spannungspegel und der Wert FALSCH mit einem anderen Spannungspegel, beispielsweise OV, assoziiert.

Das Taktsignal 14 ist auf ein Gatter 38 geführt, welches durch das logische Ergebnissignal 37 gesteuert wird. Weist das logische Ergebnissignal den Wert WAHR auf, so wird das Taktsignal 14 durch das Gatter 38 hindurchgeleitet und so ein Abrufsignal 39 erzeugt, welches Abrufpulse 45 umfasst, die denen des Taktsignals entsprechen. Weist das logische Ergebnissignal den Wert FALSCH auf, sperrt das Gatter und das Abrufsignal 39 weist einen vorgegebenen Wert, beispielsweise eine Spannung von 0V auf. Das Gatter 38 kann durch eine Gatterschaltung realisiert sein, die beispielsweise als UND-Schaltung ausgebildet ist. Das Abrufsignal 39 wird an einem Abrufsignalausgang 48 ausgegeben. An dieser Stelle sei angemerkt, dass als Taktsignal 14 auch ein optisches Signal verwendet werden kann. Die Taktpulse 15 entsprechen dann beispielsweise Lichtpulsen. Wichtig festzustellen ist, dass das Abrufsignal 39 Abrufpulse 45-2, 45-3, 45-7, 45-10 bis 45-14 umfasst, die jenen Taktpulsen 15-2, 15-3, 15-7, 15-10 bis 15-14 entsprechen, die wiederum einer Spannung des Pulsenergiesignals zeitlich zugeordnet sind, welche die Schwellenwertbedingung erfüllt. Die übrigen Taktpulse 15-1, 15-4 bis 15-6, 15-8, 15-9 des Taktsignals 14 werden quasi "entfernt" und sind nicht im Abrufsignal 19 enthalten, wie dieses grafisch angedeutet ist. Taktpulse 15-1, 15-4 bis 15-6, 15-8, 15-9, die zu Spannungswerten des Pulsenergiesignals 10 zuzuordnen sind, welche die Schwellenwertbedingung nicht erfüllen, werden somit durch das Gatter 38 blockiert und nicht weitergeleitet. Für diese Taktpulse 15-1, 15-4 bis 15-6, 15-8, 15-9 gibt es im Abrufsignal 39 keine Entsprechungen.

Ferner weist die Filtereinrichtung 32 eine Spannungsquelle 40 auf, welche ein hinsichtlich der Spannung stabilisiertes Energiesteuersignal 41 erzeugt. Vorzugsweise ist die Spannungsquelle einstellbar, so dass die Spannung des Energiesteuersignals 41 gemäß einer Vorgabe für eine Steuerspannung erzeugt wird.

Über eine Schnittstelle 42 kann die Filtereinrichtung 32 die Vorgabe für die Steuerspannung empfangen. Ebenso kann diese alternativ oder zusätzlich über ein mechanisches Stellglied (nicht dargestellt) an der Filtereinrichtung 32. einstellbar sein.

Über die Schnittstelle 42 kann bei einer Ausführungsform auch die Schwellenwertbedingung 36 erfassbar sein. Bei einer Ausführungsform ist die Vergleichereinrichtung 35 ausgebildet, Schwellenwertbedingungen auszuwerten, die einen unteren Grenzschwellenwert umfasst. Die Vergleichereinrichtung 35 muss hierfür eine Vergleichsschaltung aufweisen, die die Spannung mit dem unteren Grenzschwellenwert vergleicht und ein Ergebnissignal mit dem Wert WAHR erzeugt, wenn die Spannung des Pulsenergiesignals 10 den unteren Grenzschwellenwert übersteigt.

Bei einer anderen Ausführungsform ist die Vergleichereinrichtung so ausgebildet, dass diese Schwellenwertbedingungen auswerten kann, die einen Vorgabe-Spannungsbereich umfassen. Dieser kann durch einen unteren Grenzschwellenwert und durch einen oberen Grenzschwellenwert angegeben sein. Es sind auch andere Ausgestaltungen möglich, die einen Grenzschwellenwert und eine Intervallspannung angeben. Bei dieser anderen Ausführungsform umfasst die Vergleichereinrichtung 35 beispielsweise zwei Vergleicherschaltungen, die die Spannung des Pulsenergiesignals mit den Grenzschwellenwerten vergleichen. Das Ergebnissignal 37 wird auf den Wert WAHR gesetzt, wenn die Spannung oberhalb des unter Grenzschwellenwert und unterhalb des oberen Grenzschwellenwerts liegt, und ansonsten auf den Wert FALSCH gesetzt. Diese Ausführungsform ermöglicht es, Bearbeitungsschritte mit einer vorgegeben Pulsenergie auszuführen, die gemäß der Bearbeitungsinformation mit Pulsenergien ausgeführt werden sollten, die in dem Bereich liegen, der durch den Vorgabe-Spannungsbereich repräsentiert ist.

Um dennoch Bearbeitungsschritte mit variablen Pulsenergien ausführen zu können, beispielsweise ein Graustufenbild zu markieren (zu erzeugen), weist die Filtereinrichtung 31 nach Fig. 2 eine Umschalteinrichtung 44 auf. In einem Schaltzustand, der als Filterzustand bezeichnet ist, werden das Pulsenergiesignal der Vergleichereinrichtung und das Taktsignal dem Gatter 38 zugeführt und das Energiesteuersignal 41 von der Spannungsquelle 40 erzeugt und ausgegeben. Somit ist die Spannungsquelle mit dem Energiesteuersignalausgang 46 verbunden. In diesem Zustand können kontrastreiche "Schwarz-Weiß"-Informationen, beispielsweise eine Mikroschrift markiert werden (erzeugt werden). In einem weiteren Schaltzustand, der Umgehungszustand genannt wird, wird das Pulsenergiesignal 10 mit dem Energiesteuersignalausgang 46 verbunden, so dass das Energiesteuersignal 41 durch das Pulsenergiesignal geliefert wird. Ferner wird das Taktsignal 14 unmittelbar als Abrufsignal 39 auf einen Abrufsignalausgang 48 geführt oder das Gatter 38 in jenen Zustand versetzt, dass jeder Taktpuls 15 einen Abrufpuls 45 erzeugt. Möglich ist es, dass das Pulsenergiesignal 10 und/oder das Taktsignal 14 über eine Verzögerungsschaltung 47 geführt werden, um eine zeitliche Anpassung an die Signalverarbeitungsdauern zu erhalten, die im Filterzustand auftreten, um eine Anpassung an die Strahlführung durch die Strahlführungseinrichtung 5 beizubehalten.

Bei einer Ausführungsform weist die Steuereinrichtung 31 eine Informationsfiltereinrichtung 51 auf, die die Bearbeitungsinformationen einer Hochpassfilterung unterzieht und so eine Kantenbearbeitungsinformation 52 erzeugt. Für jeden Bearbeitungsort des zu bearbeitenden Gegenstands gibt es nun eine Bearbeitungsinformation, die eine Pulsenergie für einen Bearbeitungsschritt an diesem Ort angibt, und eine Kantenbearbeitungsinformation, die eine Angabe darüber enthält, wie stark die Pulsenergie gemäß der Bearbeitungsinformation von der Pulsenergie des vorausgehenden zu bearbeitenden benachbarten Orts auf dem Gegenstand abweicht. Erhöht sich der die Pulsenergie von einem Ort zu dem nächsten, so weist Letzterer einen großen Wert in der Kantenbearbeitungsinformation auf. Die Kantenbearbeitungsinformation enthält eine Information, wie eine "Kontrastkante", ein Wechsel von hell nach dunkel in der erzeugten Information, nachgearbeitet werden kann.

Wird nun die Bearbeitungsinformation 7 genutzt, um den Gegenstand im Umgehungszustand der Umschalteinrichtung 44 in der Filtereinrichtung 31, zu markieren, so wird beispielsweise eine Graustufenabbildung markiert, deren Kanten aufgrund der Tiefpasseigenschaft des Pulslasers 4, wie im Zusammenhang mit der Ausführungsform nach Fig. 1 erläutert, ausgewaschen und kontrastschwach sind.

Anschließend wird bei gleicher erneuter Ansteuerung der Strahlführungseinrichtung 5 eine erneute Bearbeitung des Gegenstands vorgenommen, wobei die Kantenbearbeitungsinformationen 52 zur Erzeugung des Pulsenergiesignals 10 genutzt werden und die Filtereinrichtung 31 mit der Umschalteinrichtung 44 im Filterzustand betrieben wird. Die Schwellenwertbedingung 36 wird so gesetzt, dass nur Orte markiert werden, an denen in den Bearbeitungsinformationen ein abrupter Wechsel der Bearbeitungsenergie auftritt, und somit die Kantenbearbeitungsinformationen große Werte aufweisen. Die Spannung des durch die Spannungsquelle 40 erzeugten Energiesteuersignals 41 kann in vielen Fällen moderat gewählt werden, da bereits in dem ersten Bearbeitungsschritt eine Teilschwärzung bewirkt wurde. Die Markierung bzw. Bearbeitung gemäß der Kantenbearbeitungsinformationen erfolgt somit deckungsgleich mit der Bearbeitung gemäß der Bearbeitungsinformationen 7 und sorgt für eine Kontrastverbesserung. Es versteht sich, dass diese Nachbearbeitung auf einen Teil der Bearbeitungsinformationen, die beispielsweise ein Geschichtsbild darstellen, beschränkt werden kann.

Ebenso kann eine Umschaltung zwischen dem Filterzustand und dem Umgehungszustand auch ohne eine Nachbearbeitung während der Bearbeitung der Bearbeitungsinformationen erfolgen, um unterschiedliche Anteile der Bearbeitungsinformationen gemäß den unterschiedlichen Vorteilen der Umschaltzustände zu markieren. Im Umgehungszustand können Graustufen erzeugt werden, im Filterzustand kontrastreiche und örtlich hoch aufgelöste feine Strukturen markiert werden.

Es versteht sich für den Fachmann, dass nur beispielhafte Ausführungsformen beschrieben sind. Insbesondere eignen sich das beschriebene Bearbeitungsverfahren und die Laserbearbeitungsvorrichtung sowie die Filtereinrichtung besonders, um individualisierende und/oder personalisierende Informationen in einen als Sicherheitsdokument ausgebildeten Gegenstand zu markieren.

### Bezugszeichenliste

- 1: Laserbearbeitungsvorrichtung
- 2: Gegenstand
- 3: Steuereinrichtung
- 4: Pulslaser
- 5: Strahlführungseinrichtung
- 6: Laserstrahl
- 7: Bildbearbeitungsinformation
- 8: Energiesteuereingang
- 9: Abrufeingang
- 10: Pulsenergiesignal
- 11: Spannungsverlauf
- 12: Spannung
- 13: Zeit
- 14: Taktsignal
- 15: Taktpulse
- 16: grafische Darstellung
- 17: Steuersignal
- 18: Galvanometer
- 19: Laserpulse
- 20: grafische Darstellung
- 21: Pulsenergie
- 22: Bildpurikt
- 30: Laserbearbeitungsvorrichtung
- 31: Steuereinrichtung
- 32: Filtereinrichtung
- 33: Pulsenergieeingang
- 34: Taktsignaleingang
- 35: Vergleichereinrichtung
- 36: Schwellenwertbedingung
- 37: Ergebnissignal
- 38: Gatter
- 39: Abrufsignal
- 40: Spannungsquelle
- 41: Energiesteuersignal
- 42: Schnittstelle
- 43: grafische Darstellung
- 44: Umschalteinrichtung
- 45: Abrufpulse
- 46: Energiesteuersignalausgang
- 47: Verzögerungsschaltung
- 48: Abrufsignalausgang
- 51: Informationsfiltereinrichtung
- 52: Kantenbearbeitungsinformation

## Patentansprüche

1. Laserbearbeitungsvorrichtung (30) zur Laserbearbeitung eines Gegenstands (2), insbesondere zur Lasermarkierung eines auf Kunststoffbasis hergestellten Dokuments, umfassend
einen hinsichtlich seiner Pulsenergie und eines zeitlichen Abrufs von Laserpulsen (19) steuerbaren Pulslaser (4), welcher
einen Energiesteuereingang (8) zum Empfangen eines analogen Signals, dessen Spannung die Laserpulsenergie steuert, und einen Abrufeingang (9) zum Empfangen eines Signals, mittels dessen zeitlich ein Abrufen der Laserpulse (19) steuerbar ist,
umfasst,
eine Steuereinrichtung (31), die ausgebildet ist, anhand einer Bearbeitungsinformation (7) ein Pulsenergiesignal (10) zu erzeugen, welches zeitlich korreliert mit einem Taktsignal (14) Spannungswerte annimmt, die eine Pulsenergie für die Laserpulse (19) repräsentieren, welche durch das Taktsignal (14) abrufbar sind,
**dadurch gekennzeichnet, dass**
das Pulsenergiesignal (10) und das Taktsignal (14) in eine Filtereinrichtung (32), geführt sind, wobei die Filtereinrichtung (32) umfasst
eine Vergleichereinrichtung (35) zum Vergleichen einer Spannung des Pulsenergiesignals (10) mit mindestens einer vorgebbaren Schwellenwertbedingung (36) und Erzeugen eines logischen Ergebnissignals (37); und
ein Gatter (38), auf das das Taktsignal (14) geführt ist, wobei das Gatter mittels des Ergebnissignals (37) gesteuert wird und hierüber ein Abrufsignal (39) erzeugt und ausgibt, sowie
eine einstellbare Spannungsquelle (40), die ein Energiesteuersignal (41) mit einer Spannung gemäß einer Vorgabe für eine Steuerspannung ausgibt.

2. Vorrichtung (30) nach Anspruch 1, **dadurch gekennzeichnet, dass** die Vergleichereinrichtung (35) ausgebildet ist, Schwellenwertbedingungen (36) auszuwerten, die einen unteren Grenzschwellenwert umfassen und das logische Ergebnissignal den Wert WAHR annimmt, wenn die Spannung des Pulsenergiesignals (10) den unteren Grenzschwellenwert übersteigt, und ansonsten den Wert FALSCH annimmt oder alternativ das logische Ergebnissignal den Wert WAHR annimmt, wenn die Spannung des Pulsenergiesignals (10) den unteren Grenzschwellenwert unterschreitet, und ansonsten den Wert FALSCH annimmt.

3. Vorrichtung (30) nach Anspruch 1 oder 2, **dadurch gekennzeichnet, dass** die Vergleichereinrichtung (35) ausgebildet ist, Schwellenwertbedingungen auszuwerten, die einen Vorgabe-Spannungsbereich umfassen, und das logische Ergebnissignal (37) den Wert WAHR annimmt, wenn die Spannung des Pulsenergiesignals (10) in dem Vorgabe-Spannungsbereich liegt, und ansonsten den Wert FALSCH annimmt oder alternativ das logische Ergebnissignal (37) den Wert FALSCH annimmt, wenn die Spannung des Pulsenergiesignals (10) in dem Vorgabe-Spannungsbereich liegt, und ansonsten den Wert WAHR annimmt.

4. Vorrichtung (30) nach einem der vorangehenden Ansprüche, **dadurch gekennzeichnet, dass** die Steuereinrichtung (31) ausgebildet ist, zusätzlich eine Strahlführungseinrichtung (5) angepasst an das Pulsenergiesignal (10) und das Taktsignal (14) zu steuern.

5. Vorrichtung (30) nach einem der vorangehenden Ansprüche, **dadurch gekennzeichnet, dass** die Filtereinrichtung (32) eine Umschalteinrichtung (44) aufweist und in einem Schaltzustand, der als Filterzustand bezeichnet ist, die Spannungsquelle mit dem Energiesteuersignalausgang (46) verbunden ist und in einem anderen Schaltzustand, der als Umgehungszustand bezeichnet ist, das an dem Steuereingang empfangene Pulsenergiesignal auf den Energiesteuersignalausgang (46) geführt ist und das Gatter (38) so gesteuert ist, dass das erzeugte Abrufsignal (39) dem Taktsignal (14) gleicht oder alternativ das Taktsignal (14) auf den Abrufsignalausgang (48) geführt ist.

6. Filtereinrichtung (32) für eine Laseransteuerung eines hinsichtlich seiner Pulsenergie und eines zeitlichen Abrufs von Laserpulsen (19) steuerbaren Pulslasers (4), welcher einen Energiesteuereingang (8) zum Empfangen eines analogen Signals, dessen Spannung die Laserpulsenergie steuert und einen Abrufeingang (9) zum Empfangen eines Signals, mittels dessen zeitlich ein Abrufen der Laserpulse (19) steuerbar ist, umfasst, wobei die Filtereinrichtung (32)
einen Pulsenergieeingang (33) zum Empfangen eines Pulsenergiesignal (10), welches zeitlich korreliert mit einem Taktsignal (14) Spannungswerte annimmt, die eine Pulsenergie für die Laserpulse (19) repräsentieren, welche durch das Taktsignal (14) abrufbar sind, und
einen Taktsignaleingang (34) zum Empfangen des Taktsignals (14) sowie einen Energiesteuersignalausgang (46) und
einen Abrufsignalausgang (48) und ferner
eine Vergleichereinrichtung (35) zum Vergleichen einer Spannung des Pulsenergiesignals (10) mit mindestens einer vorgebbaren Schwellenwertbedingung (36) und Erzeugen eines logischen Ergebnissignals (37) und
ein Gatter (38), auf das das Taktsignal (14) geführt ist und welches mittels des Ergebnissignals gesteuert wird und hierüber ein Abrufsignal (39) erzeugt und an dem Abrufsignalausgang (48) ausgibt, sowie eine einstellbare Spannungsquelle (40), die ein Energiesteuersignal (41) mit einer vorgebbaren Steuerspannung an dem Energiesteuersignalausgang (46) ausgibt,
umfasst.

7. Filtereinrichtung (32) nach Anspruch 6, **dadurch gekennzeichnet, dass** die Filtereinrichtung (32) eine Umschalteinrichtung (44) aufweist und in einem Schaltzustand, der als Filterzustand bezeichnet ist, die Spannungsquelle mit dem Energiesteuersignalausgang (46) verbunden ist und in einem anderen Schaltzustand, der als Umgehungszustand bezeichnet ist, das an dem Steuereingang empfangene Pulsenergiesignal auf den Energiesteuersignalausgang (46) geführt ist und das Gatter (38) so gesteuert ist, dass das erzeugte Abrufsignal (39) dem Taktsignal (14) gleicht oder alternativ das Taktsignal (14) auf den Abrufsignalausgang (48) geführt ist.

8. Verfahren zum Steuern eines hinsichtlich seiner Pulsenergie und eines zeitlichen Abrufs von Laserpulsen (19) steuerbaren Pulslasers (4) bei einer Materialbearbeitung eines Gegenstands (2), insbesondere bei der Markierung eines kunststoffbasierten Dokuments, umfassend die Schritte:
Vergleichen eines Pulsenergiesignals (10), welches zeitlich korreliert mit einem Taktsignal (14) Spannungswerte annimmt, die eine Pulsenergie für die Laserpulse (19) zum Bearbeiten repräsentieren, mit einer Schwellenwertbedingung (36) und Erzeugen eines logischen Ergebnissignals (37);
Führen des Taktsignals (14) auf ein Gatter (38) und Steuern des Gatters (38) mittels des logischen Ergebnissignals (37) und Erzeugen eines Abrufsignals (39) hierüber;
Bereitstellen eines Energiesteuersignals (41), welches eine Spannung gemäß einer Vorgabe für eine Steuerspannung aufweist; und
Verwenden des Abrufsignals (39) und des Energiesteuersignals (41) zum Steuern des Pulslasers (4).

9. Verfahren nach Anspruch 8, **dadurch gekennzeichnet, dass** der Pulslaser (4) zeitweise in einem Umgehungsverfahrensmodus angesteuert wird, bei dem das Pulsenergiesignal (10) als das Energiesteuersignal (41) und das Taktsignal (14) als Abrufsignal (39) verwendet werden.

10. Verfahren nach einem der Ansprüche 8 oder 9, **dadurch gekennzeichnet, dass** zusätzlich eine Strahlführungseinrichtung (5) angepasst an das Pulsenergiesignal (10) und das Taktsignal (14) gesteuert wird, um die von dem Pulslaser (4) abgerufenen Laserpulse (19) gesteuert auf dem Gegenstand (2) zu positionieren.

11. Verfahren nach Anspruch 10, **dadurch gekennzeichnet, dass** die Bearbeitungsinformation (7) einer Hochpassfilterung unterzogen wird und hierbei eine Kantenbearbeitungsinformation (52) erstellt und ferner zunächst das Pulsenergiesignal (10) gemäß der Bearbeitungsinformation (7) und anschließend gemäß der Kantenbearbeitungsinformation (52) ausgegeben werden, wobei die Strahlführungseinrichtung (5) so angesteuert wird, dass die derselben Bearbeitungsposition zugeordneten Laserpulse (19) gemäß der Bearbeitungsinformation (7) und der Kantenbearbeitungsinformation (52) deckungsgleich nacheinander auf das Werkstück abgegeben werden und wobei der Pulslaser (4) während des Ausgebens des Pulsenergiesignals (10) gemäß der Bearbeitungsinformationen (7) mittels des Umgehungsverfahrensmodus angesteuert wird und ansonsten nicht.

## Claims

1. A laser processing apparatus (30) for the laser processing of an object (2), in particular for the laser marking of a document produced on the basis of plastic, comprising
a pulsed laser (4), which is controllable with regard to its pulse energy, and a temporal retrieval of laser pulses (19) and which comprises
an energy control input (8) for receiving an analog signal, the voltage of which controls the laser pulse energy, and a retrieval input (9) for receiving a signal by means of which a retrieval of the laser pulses (19) is controllable temporally,
a control device (31), designed to generate, on the basis of processing information (7), a pulse energy signal (10) which, in a manner temporally correlated with a clock signal (14) assumes voltage values which represent a pulse energy for the laser pulses (19) which are retrievable by means of the clock signal (14),
**characterized in that**
the pulse energy signal (10) and the clock signal (14) are passed into a filter device (32), wherein the filter device (32) comprises
a comparator device (35) for comparing a voltage of the pulse energy signal (10) with at least one predefinable threshold value condition (36) and generating a logic result signal (37); and
a gate (38), to which the clock signal (14) is passed, wherein the gate is controlled by means of the result signal (37) and thereby generates and outputs a retrieval signal (39), and
an adjustable voltage source (40), which outputs an energy control signal (41) with a voltage in accordance with a predefinition for a control voltage.

2. The apparatus (30) as claimed in claim 1, **characterized in that** the comparator device (35) is designed to evaluate threshold value conditions (36) comprising a lower limit threshold value and the logic result signal assumes the value TRUE, if the voltage of the pulse energy signal (10) exceeds the lower limit threshold value, and otherwise assumes the value FALSE, or alternatively the logic result signal assumes the value TRUE if the voltage of the pulse energy signal (10) falls below the lower limit threshold value, and otherwise assumes the value FALSE.

3. The apparatus (30) as claimed in claim 1 or 2, **characterized in that** the comparator device (35) is designed to evaluate threshold value conditions which comprise a predefined voltage range, and the logic result signal (37) assumes the value TRUE if the voltage of the pulse energy signal (10) lies in the predefined voltage range, and otherwise assumes the value FALSE, or alternatively the logic result signal (37) assumes the value FALSE if the voltage of the pulse energy signal (10) lies in the predefined voltage range, and otherwise assumes the value TRUE.

4. The apparatus (30) as claimed in any of the preceding claims, **characterized in that** the control device (31) is designed additionally to control a beam guiding device (5) in a manner adapted to the pulse energy signal (10) and the clock signal (14).

5. The apparatus (30) as claimed in any of the preceding claims, **characterized in that** the filter device (32) has a changeover device (44) and, in one switching state, designated as filter state, the voltage source is connected to the energy control signal output (46) and, in another switching state, designated as bypass state, the pulse energy signal received at the control input is passed to the energy control signal output (46) and the gate (38) is controlled such that the generated retrieval signal (39) is identical to the clock signal (14), or alternatively the clock signal (14) is passed to the retrieval signal output (48).

6. A filter device (32) for laser driving of a pulsed laser (4) which is controllable with regard to its pulse energy and a temporal retrieval of laser pulses (19) and which comprises an energy control input (8) for receiving an analog signal, the voltage of which controls the laser pulse energy, and a retrieval input (9) for receiving a signal by means of which a retrieval of the laser pulses (19) is controllable temporally, wherein the filter device (32) comprises
a pulse energy input (33) for receiving a pulse energy signal (10) which, in a manner temporally correlated with a clock signal (14) assumes voltage values which represent a pulse energy for the laser pulses (19) which are retrievable by means of the clock signal (14), and
a clock signal input (34) for receiving the clock signal (14), and
an energy control signal output (46) and
a retrieval signal output (48) and furthermore,
a comparator device (35) for comparing a voltage of the pulse energy signal (10) with at least one predefinable threshold value condition (36) and generating a logic result signal (37) and
a gate (38) to which the clock signal (14) is passed and which is controlled by means of the result signal and thereby generates a retrieval signal (39) and outputs it at the retrieval signal output (48), and
an adjustable voltage source (40) which outputs an energy control signal (41) with a predefinable control voltage at the energy control signal output (46).

7. The filter device (32) as claimed in claim 6, **characterized in that** the filter device (32) has a changeover device (44) and, in one switching state, designated as filter state, the voltage source is connected to the energy control signal output (46) and, in another switching state, designated as bypass state, the pulse energy signal received at the control input is passed to the energy control signal output (46) and the gate (38) is controlled such that the generated retrieval signal (39) is identical to the clock signal (14), or alternatively the clock signal (14) is passed to the retrieval signal output (48).

8. A method for controlling a pulsed laser (4) which is controllable with regard to its pulse energy and a temporal retrieval of laser pulses (19), during material processing of an object (2) in particular during the marking of a plastic-based document, comprising the following steps:
comparing a pulse energy signal (10) which, in a manner temporally correlated with a clock signal (14) assumes voltage values with represent a pulse energy for the laser pulses (19) for processing with a threshold value condition (36) and generating a logic result signal (37);
passing the clock signal (14) to a gate (38) and
controlling the gate (38) by means of the logic result signal (37) and generating a retrieval signal (39) thereby;
providing an energy control signal (41) having a voltage in accordance with a predefinition for a control voltage; and
using the retrieval signal (39) and the energy control signal (41) for controlling the pulsed laser (4).

9. The method as claimed in claim 8, **characterized in that** the pulsed laser (4) is driven at times in a bypass method mode, in which the pulse energy signal (10) is used as the energy control signal (41) and the clock signal (14) is used as the retrieval signal (39).

10. The method as claimed in either of claims 8 and 9, **characterized in that** additionally a beam guiding device (5) is controlled in a manner adapted to the pulse energy signal (10) and the clock signal (14) in order to position the laser pulses (19) retrieved by the pulsed laser (4) on the object (2) in a controlled manner.

11. The method as claimed in claim 10, **characterized in that** the processing information (7) is subjected to high-pass filtering and creates edge processing information (52) in the process and, furthermore, firstly the pulse energy signal (10) is output in accordance with the processing information (7) and subsequently it is output in accordance with the edge processing information (52), wherein the beam guiding device (5) is driven such that the laser pulses (19) assigned to the same processing position are emitted in accordance with the processing information (7) and the edge processing information (52) congruently successively onto the workpiece, and wherein the pulsed laser (4) is driven during the outputting of the pulse energy signal (10) in accordance with the processing information (7) by means of the bypass method mode, and otherwise it is not driven thus.

## Revendications

1. Dispositif d'usinage au laser (30) servant à usiner au laser un objet (2), en particulier servant à marquer au laser un document fabriqué à partir d'une base plastique, comprenant
un laser à impulsions (4) dont l'énergie d'impulsion et l'extraction des impulsions laser (19) dans le temps peuvent être commandées,
lequel laser à impulsions comprend une entrée de commande d'énergie (8) servant à recevoir un signal analogue, dont la tension commande l'énergie des impulsions laser, et une entrée d'extraction (9) servant à recevoir un signal au moyen duquel une extraction des impulsions laser (19) peut être commandée dans le temps,
un système de commande (31) qui est réalisé pour produire, à l'aide d'une information d'usinage (7), un signal d'énergie d'impulsion (10), lequel accepte des valeurs de tension dans le temps en corrélation avec un signal d'horloge (14),
lesquelles valeurs de tension représentent une énergie d'impulsion pour les impulsions laser (19) pouvant être extraites par le signal d'horloge (14),
**caractérisé en ce que**
le signal d'énergie d'impulsion (10) et le signal d'horloge (14) sont guidés dans un système de filtrage (32), sachant que le système de filtrage (32) comprend un système de comparaison (35) servant à comparer une tension du signal d'énergie d'impulsion (10) à au moins une condition de valeur seuil (36) pouvant être prescrite et à produire un signal de résultat (37) logique ; et
une porte (38), sur laquelle le signal d'horloge (14) est guidé, sachant que la porte est commandée au moyen d'un signal de résultat (37) et produit et délivre, par l'intermédiaire dudit signal, un signal d'extraction (39) ; ainsi
qu'une source de tension (40) pouvant être paramétrée, laquelle délivre un signal de commande d'énergie (41) présentant une tension conforme à une prescription applicable à une tension de commande.

2. Dispositif (30) selon la revendication 1, **caractérisé en ce que** le système de comparaison (35) est réalisé pour analyser des conditions de valeur seuil (36), qui comprennent une valeur limite seuil inférieure, et **en ce que** le signal de résultat logique accepte la valeur VRAI, lorsque la tension du signal d'énergie d'impulsion (10) dépasse la valeur limite seuil inférieure, et accepte le cas échéant la valeur FAUX, ou **en ce qu'**en variante le signal de résultat logique accepte la valeur VRAI, lorsque la tension du signal d'énergie d'impulsion (10) reste inférieure à la valeur limite seuil inférieure, et accepte le cas échéant la valeur FAUX.

3. Dispositif (30) selon la revendication 1 ou 2, **caractérisé en ce que** le système de comparaison (35) est réalisé pour analyser des conditions de valeur seuil, lesquelles comprennent une plage de tensions prescrite, et **en ce que** le signal de résultat (37) logique accepte la valeur VRAI, lorsque la tension du signal d'énergie d'impulsion (10) se trouve dans la plage de tensions prescrite, et accepte le cas échéant la valeur FAUX, ou **en ce qu'**en variante le signal de résultat (37) logique accepte la valeur FAUX, lorsque la tension du signal d'énergie d'impulsion (10) se trouve dans la plage de tensions prescrite, et accepte le cas échéant la valeur VRAI.

4. Dispositif (30) selon l'une quelconque des revendications précédentes, **caractérisé en ce que** le système de commande (31) est réalisé pour commander en supplément un système de guidage de rayonnement (5) de manière adaptée au signal d'énergie d'impulsion (10) et au signal d'horloge (14).

5. Dispositif (30) selon l'une quelconque des revendications précédentes, **caractérisé en ce que** le système de filtrage (32) présente un système de commutation (44), et **en ce que** la source de tension est reliée à la sortie de signal de commande d'énergie (46) dans un état de commutation désigné comme état de filtrage, et **en ce que**, dans un autre état de commutation désigné comme état de contournement, le signal d'énergie d'impulsion reçu au niveau de l'entrée de commande est guidé sur la sortie de signal de commande d'énergie (46), et **en ce que** la porte (38) est commandée de telle manière que le signal d'extraction (39) produit est identique au signal d'horloge (14) ou qu'en variante le signal d'horloge (14) est guidé sur la sortie de signal d'extraction (48).

6. Système de filtrage (32) destiné à une commande de laser d'un laser à impulsions (4) dont l'énergie d'impulsion et une extraction d'impulsions laser (19) dans le temps peuvent être commandées, lequel laser à impulsions comprend une entrée de commande d'énergie (8) servant à recevoir un signal similaire, dont la tension commande l'énergie d'impulsion laser, et une entrée d'extraction (9) servant à recevoir un signal, au moyen duquel une extraction des impulsions laser (19) peut être commandée dans le temps, sachant que le système de filtrage (32) comprend :
une entrée d'énergie d'impulsions (33) servant à recevoir un signal d'énergie d'impulsion (10), qui accepte des valeurs de tensions dans le temps en corrélation avec un signal d'horloge (14), lesquelles valeurs de tension représentent une énergie d'impulsion pour les impulsions laser (19) pouvant être extraites par le signal d'horloge (14) ; et
une entrée de signal d'horloge (34) servant à recevoir le signal d'horloge (14) ; ainsi qu'une sortie de signal de commande d'énergie (46) ; et
une sortie de signal d'extraction (48) ; et en outre
un système de comparaison (35) servant à comparer une tension du signal d'énergie d'impulsion (10) à au moins une condition de valeur seuil (36) pouvant être prescrite et servant à produire un signal de résultat (37) logique ; et
une porte (38), sur laquelle le signal d'horloge (14) est guidé et qui est commandée au moyen du signal de résultat et produit, par l'intermédiaire de ce dernier, un signal d'extraction (39) pour le délivrer à la sortie de signal d'extraction (48) ; ainsi qu'une source de tension (40) pouvant être paramétrée, qui délivre un signal de commande d'énergie (41) présentant une tension de commande pouvant être prédéfinie à la sortie de signal de commande d'énergie (46).

7. Système de filtrage (32) selon la revendication 6, **caractérisé en ce que** le système de filtrage (32) présente un système de commutation (44), et **en ce que** la source de tension est reliée à la sortie de signal de commande d'énergie (46) dans un état de commutation désigné d'état de filtrage, et **en ce que** le signal d'énergie d'impulsion reçu au niveau de l'entrée de commande est guidé sur la sortie de signal de commande d'énergie (46) dans un autre état de commutation désigné d'état de contournement, et **en ce que** la porte (38) est commandée de telle manière que le signal d'extraction (39) produit est identique au signal d'horloge (14) ou qu'en variante le signal d'horloge (14) est guidé sur la sortie de signal d'extraction (48).

8. Procédé servant à commander un laser à impulsions (4) dont l'énergie d'impulsion et une extraction des impulsions laser (19) dans le temps peuvent être commandées, lors de l'usinage de matériau d'un objet (2), en particulier lors du marquage au laser d'un document à base de plastique, comprenant les étapes suivantes consistant à :
comparer un signal d'énergie d'impulsion (10), qui accepte des valeurs de tension dans le temps en corrélation avec un signal d'horloge (14), lesquelles valeurs de tension représentent une énergie d'impulsion destinée aux impulsions laser (19) à usiner, à une condition de valeur seuil (36) et produire un signal de résultat (37) logique ;
guider le signal d'horloge (14) sur une porte (38) ; et
commander la porte (38) au moyen du signal de résultat (37) logique et produire un signal d'extraction (39) par l'intermédiaire de ce dernier ;
fournir un signal de commande d'énergie (41) qui présente une tension conforme à une prescription applicable à une tension de commande ; et
utiliser le signal d'extraction (39) et le signal de commande d'énergie (41) pour commander le laser à impulsions (4).

9. Procédé selon la revendication 8, **caractérisé en ce que** le laser à impulsions (4) est commandé par intermittence dans un mode de procédé de contournement, dans le cadre duquel le signal d'énergie d'impulsion (10) est utilisé comme signal de commande d'énergie (41) et le signal d'horloge (14) est utilisé comme signal d'extraction (39).

10. Procédé selon l'une quelconque des revendications 8 ou 9, **caractérisé en ce qu'**en supplément un système de guidage de rayonnement (5) est commandé de manière adaptée au signal d'énergie d'impulsion (10) et au signal d'horloge (14) afin de positionner les impulsions laser (19) extraites du laser à impulsions (4) de manière commandée sur l'objet (2).

11. Procédé selon la revendication 10, **caractérisé en ce que** l'information d'usinage (7) est soumise à un filtrage passe-haut et délivre alors une information d'usinage d'arête (52), et **en ce qu'**en outre dans un premier temps le signal d'énergie d'impulsion (10) est délivré selon l'information d'usinage (7) puis selon l'information d'usinage d'arête (52), sachant que le système de guidage de rayonnement (5) est commandé de telle manière que les impulsions laser (19) associées à la même position d'usinage sont transmises à la pièce à usiner selon l'information d'usinage (7) et selon l'information d'usinage d'arête (52) l'une après l'autre de manière à coïncider et sachant que le laser à impulsions (4) est commandé au cours de la transmission du signal d'énergie d'impulsion (10) selon les informations d'usinage (7) au moyen du mode de procédé de contournement et pas autrement.
